(19) Europäisches Patentamt
European Patent Office
Office européen des brevets

(11) **EP 1 276 246 B1**

(12) **EUROPÄISCHE PATENTSCHRIFT**

(45) Veröffentlichungstag und Bekanntmachung des Hinweises auf die Patenterteilung:
**26.11.2008   Patentblatt 2008/48**

(51) Int Cl.:
*H04B 1/707* (2006.01)   *H04B 7/26* (2006.01)

(21) Anmeldenummer: **01116961.2**

(22) Anmeldetag: **11.07.2001**

(54) **Verfahren und Vorrichtungen zur Synthese von gleichzeitiger Erfassung und gleichzeitiger Übertragen für den Downlink-kanal in einem CDMA Mobilfunknetz**

Method and system for a synthesis of joint detection and joint transmission for a downlink channel in a CDMA mobile radio network

Procédé et système pour la synthèse de détection conjointe et transmission conjointe pour un canal descendant dans un système de communication mobile AMRC

(84) Benannte Vertragsstaaten:
**DE FR GB**

(43) Veröffentlichungstag der Anmeldung:
**15.01.2003   Patentblatt 2003/03**

(73) Patentinhaber: **Nokia Siemens Networks GmbH & Co. KG**
**81541 München (DE)**

(72) Erfinder:
- **Baier, Paul-Walter**
  **67661 Kaiserslautern (DE)**
- **Meurer, Michael**
  **67663 Kaiserslautern (DE)**
- **Tröger, Hendrik**
  **67657 Kaiserslautern (DE)**
- **Weber, Tobias**
  **67731 Otterbach (DE)**

(56) Entgegenhaltungen:
- **MEURER M ET AL: "Synthesis of joint detection and joint transmission in CDMA downlinks" ELECTRONICS LETTERS, 5 JULY 2001, IEE, UK, Bd. 37, Nr. 14, Seiten 919-920, XP002185172 ISSN: 0013-5194**
- **MEURER M ET AL: "Joint transmission: advantageous downlink concept for CDMA mobile radio systems using time division duplexing" ELECTRONICS LETTERS, IEE STEVENAGE, GB, Bd. 36, Nr. 10, 11. Mai 2000 (2000-05-11), Seiten 900-901, XP006015228 ISSN: 0013-5194**
- **GEORGOULIS S ET AL: "Pre-equalisation, transmitter precoding and joint transmission techniques for time division duplex CDMA" SECOND INTERNATIONAL CONFERENCE ON 3G MOBILE COMMUNICATION TECHNOLOGIES (CONF. PUBL. NO.477), PROCEEDINGS OF 3G 2001 INTERNATIONAL CONFERENCE ON 3G MOBILE COMMUNICATION TECHNOLOGIES, LONDON, UK, 26-28 MARCH 2001, Seiten 257-261, XP002185173 2001, London, UK, IEE, UK ISBN: 0-85296-731-4**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 276 246 B1

**Beschreibung**

Die Erfindung bezieht sich auf ein Verfahren zum Übertragen von Daten über eine Funkschnittstelle mit den oberbegrifflichen Merkmalen des Patentanspruchs 1 und Vorrichtungen zum Durchführen solcher Verfahren.

In Funk-Kommunikationssystemen, zum Beispiel gemäß dem GSModer dem UMTS-Standard (GSM: Global System for Mobile Communication; UMTS: Universal Mobile Telecommunication System) oder Funkdatennetzen (W-LAN: Wireless Local Area Network), werden Daten zwischen Sendereinrichtungen und Empfangseinrichtungen über eine Funkschnittstelle übertragen. Dabei werden Funkkanäle zwischen den verschiedenen Sendeantennen, die einer oder mehreren Sendereinrichtungen zugeordnet sind, und Empfangsantennen, die einem oder mehreren Empfängern zugeordnet sind, aufgebaut. Zur Übertragung der Daten über die Funkkanäle werden die Daten zu entsprechend geeigneten Funksignalen bzw. Sendesignalen verarbeitet. Dabei kann die Übertragung für einen Satz von Daten über einen einzigen oder mehrere Funkkanäle erfolgen. Bei der Übertragung über die Funkschnittstelle werden die Sendesignale durch verschiedene Faktoren beeinflusst, insbesondere die Wahl der wirksamen Kanäle oder Mehrfachreflexionen an Hindernissen, so dass ein empfangenes Empfangssignal in der Regel nicht identisch zu dem gesendeten Sendesignal ist.

Zur Korrektur der Einflüsse auf der Funkschnittstelle wird in den bekannten Kommunikationssystemen empfängerseitig sogenanntes Joint Detection (JD) verwendet, bei dem in den Empfangseinrichtungen bei Kenntnis der wirksamen Funkkanäle oder anderer Störeinflüsse eine entsprechende Korrektur der Empfangssignale oder anderer Störeinflüsse eine entsprechende Korrektur der Empfangssignale vorgenommen wird, bevor best möglich rekonstruierte Daten ausgegeben werden. Senderseitig wird bei der Übertragung der zu übertragenden Daten in Sendesignale ein Regelwerk berücksichtigt, in dem festgelegt wird, wie ein Standard-Sendesignal auszubilden ist.

Bekannt sind bzw. erörtert werden sogenannte Joint Pre-Distortion- und Joint Transmission- (JT-) Systeme, bei denen eine Korrektur der Einflüsse auf der Funk-Schnittstelle bereits senderseitig in der bzw. den Sendeeinrichtungen berücksichtigt wird. Bei einem solchen JT-System wird somit nicht ein Sendesignal entsprechend den Regeln zum Erzeugen eines Standard-Sendesignals ausgebildet, sondern ein Sendesignal entsprechend Regeln zum Erzeugen eines gewünschten Empfangssignals unter Berücksichtigung geschätzter und bekannter Störeinflüsse ausgebildet. Vorteilhafterweise müssen entsprechende Empfängerstationen nicht in der Lage sein, eine entsprechende Korrektur der Störeinflüsse vorzunehmen.

Die beiden Systeme unterscheiden sich somit dadurch, dass beim JD-System die Empfänger bzw. Empfangseinrichtungen eine Anpassung an die empfangenen, von den Sendern gesendeten Signale vornehmen müssen, somit die Empfangseinrichtungen anzupassen sind, während beim JT-System auch einfachste Empfangseinrichtungen ohne jegliche Anpassungsmöglichkeiten der Empfangssignale eingesetzt werden können, somit die Sendereinrichtungen an die Bedürfnisse der Empfangseinrichtungen anzupassen sind.

Bekannt ist aus M. Meurer, H. Tröger, T. Weber und P.W. Baier, "Synthesis of joint detection and joint transmission in CDMA downlinks", ELECTRONICS LETTERS, 5. July 2001, IEE, UK, Bd. 37, Nr. 14, Seiten 919 - 920, XP002185172 ISSN: 0013-5194, ein abstraktes mathematisches Verfahren zum Übertragen von Daten über eine Funk-Schnittstelle in einem Kommunikationssystem zwischen zumindest einer Sendereinrichtung mit zumindest einer Sendeantenne und zumindest einer Empfangseinrichtung mit zumindest einer Empfangsantenne über zumindest einen Funkkanal auf der Funk-Schnittstelle zwischen den Sende- und Empfangsantennen. Senderseitig werden die zu übertragenden Daten unter Berücksichtigung von Informationen über zumindest ein gewünschtes Empfangssignal zu zumindest einem Sendesignal verarbeitet und anschließend über die Funk-Schnittstelle übertragen, wie dies für Joint Transmission üblich ist. Außerdem werden empfängerseitig nach entsprechender Verarbeitung empfangener Signale rekonstruierte ursprüngliche Daten ausgegeben werden, wobei dafür senderseitig die zu übertragenden Daten als Sendesignale unter Berücksichtigung von Informationen über eine spezielle empfängerseitige Verarbeitungsmöglichkeit, insbesondere empfängerseitige Verarbeitungsmöglichkeit von Informationen über Einflüsse auf der Funk-Schnittstelle erzeugt werden.

Die Aufgabe der Ereindung besteht darin, eine weiter verbesserte Möglichkeit der Datenübertragung bereitzustellen.

Diese Aufgabe wird durch das Verfahren mit den Merkmalen des Patentanspruchs 1 bzw. die Vorrichtungen mit den Merkmalen der Patentansprüche 14 bzw. 15 gelöst.

Besonders vorteilhaft erweist sich überraschenderweise die auf den ersten Blick fernliegende Verwendung eines gemischten Systems aus Einrichtungen und Verfahrensweisen sowohl des Joint-Detection-Systems als auch des Joint-Transmission-Systems. Insbesondere ist der Einsatz einer JT-Sendeinrichtung auch in einem ansonsten reinen JD-System, d.h. in Kommunikation mit JD-Empfangseinrichtungen möglich. Wesentlich ist dabei, dass bei der Erzeugung eines Sendesignals Zusatzinformationen bezüglich der Sendesignale oder deren Verarbeitung erzeugt und übertragen werden. Empfängerseitig werden die empfangenen Signale dann unter Berücksichtigung solcher Zusatzinformationen bezüglich der Sendesignale verarbeitet.

Vorteilhafte Ausgestaltungen sind Gegenstand von abhängigen Ansprüchen.

Zweckmäßigerweise geht eine JT-Sendeeinrichtung davon aus, dass sie stets mit Empfangseinrichtungen eines bestimmten, üblichen Typs kommuniziert. Zweckmäßigerweise handelt es sich dabei um Empfangseinrichtungen, die keine spezifisch speziellen Funktionen zur Verarbeitung von empfangenen Signalen aufweisen sondern lediglich eine übliche Vorgehensweise bei der Verarbeitung empfangener Daten vorsehen. Für diese Empfangseinrichtungen, insbesondere auch Empfangseinrichtungen ohne jegliche spezielle Verarbeitungsmöglichkeit, werden entsprechend geeignete Sendesignale erzeugt. Kommuniziert die Sendeeinrichtung mit einer Empfangseinrichtung eines anderen Typs, so muss sie dies feststellen oder von der Empfangseinrichtung mitgeteilt bekommen, um für diese spezielle Empfangsstation eine entsprechende Aufbereitung der Sendesignale durchführen zu können. Für den Fall, dass die JT-Sendeeinrichtung von einer kommunizierenden Empfangseinrichtung mitgeteilt bekommt, dass diese über entsprechende spezielle Verarbeitungsmöglichkeiten der Empfangssignale verfügt, oder eine solche Information eigenständig bestimmen kann, kann dies von der JT-Sendeeinrichtung entsprechend berücksichtigt werden. Ansonsten geht die JT-Sendeeinrichtung von einer Empfangseinrichtung aus, die für das System üblich ist, in dem die JT-Sendeeinrichtung gerade eingesetzt wird.

Dadurch besteht die Möglichkeit, als Zusatzinformation Daten zu übertragen, die von den zu übertragenden Daten unabhängig sind, jedoch für die Verarbeitung in den Empfangseinrichtungen erforderlich sind. Dies können insbesondere Mittambeln oder sonstige zusätzliche Datenanteile von fremden Übertragungssystemen sein, so dass beispielsweise einer JD-Empfangseinrichtung ein Empfangssignal übermittelt werden kann, das eine Mittambel, einen speziellen Code oder dergleichen enthält, die in dem üblichen JT-Übertragungssystem im Sendesignal nicht vorgesehen wären.

Außerdem ist durch solche Zusatzinformationen die Möglichkeit gegeben, im Fall einer Vielzahl von insbesondere gemeinsam detektierenden bzw. verarbeitenden Empfangseinrichtungen bestimmte dieser Empfangseinrichtungen anzuweisen, die empfangenen Signale nicht oder auf eine spezielle Art und Weise zu verarbeiten. Somit besteht z.B. die Möglichkeit, bereits senderseitig Vorgaben für bestimmte systemfremde oder systemeigene Empfangseinrichtungen festzulegen, um eine optimale Verarbeitung der Empfangssignale zu ermöglichen. Vorteilhafterweise kann damit einer bestimmten Empfangseinrichtung die Anweisung erteilt werden, einen mitgeteilten Code nicht zu verwenden oder nur einen ihr zugewiesenen Code zu verwenden.

Eine ideale Kombination der JT- und JD-Systeme ergibt sich bei einer Erzeugung der Sendesignale unter Berücksichtigung von Informationen über eine spezielle empfängerseitige Verarbeitungsmöglichkeit, wie sie beispielsweise durch die empfängerseitige Berücksichtigung von Kanaleinflüssen gegeben ist, und von Informationen über Einflüsse auf der Funkschnittstelle seitens der Sendeeinrichtungen, wie sie aus dem JT-System bekannt sind.

Dabei kann es in einfachen Fällen zweckmäßig sein, eine Doppelkorrektur zu verhindern, wenn eine Empfangseinrichtung bereits Einflüsse der Funkschnittstelle bei der Verarbeitung der empfangenen Signale berücksichtigt und zur Vermeidung einer Doppelkorrektur die senderseitige Berücksichtigung derartiger Einflüsse bei der Erzeugung von Sendesignalen deaktiviert bzw. ausgeschlossen wird.

Zweckmäßig kann überraschenderweise aber durchaus auch eine Doppel- bzw. Überkorrektur sein, bei der senderseitig berücksichtigt wird, dass in einer Empfangseinrichtung die Verarbeitung von Empfangssignalen unter Berücksichtigung von Einflüssen auf der Funk-Schnittstelle vorgenommen wird und in den Sendeeinrichtungen mit Kenntnis dieser Verarbeitung in der Empfangseinrichtung eine zusätzliche Korrektur unter Berücksichtigung der Einflüsse auf der Funk-Schnittstelle vorgenommen wird. Während auf den ersten Blick eine Verschlechterung des Endergebnisses bei den rekonstruierten empfangen Daten zu erwarten wäre, haben Rechnersimulationen eine deutliche Optimierung bei einer solchen Überkorrektur gezeigt.

Möglich ist insbesondere auch ein Mischbetrieb verschiedenartiger Empfangseinrichtungen aus dem JD-System und dem JT-System an einer einzigen Sendeeinrichtung bzw. einem Verbund von Sendeeinrichtungen. Zweckmäßigerweise wird dabei, wie dies bei dem JT-System üblich ist, ein gemeinsames Sendesignal für alle Empfangseinrichtungen erzeugt. Dabei werden die einzelnen Empfangseinrichtungen jeweils durch für diese geeignete Sendesignal-Komponenten berücksichtigt, die in die Erzeugung des gemeinsamen Sendesignals eingehen.

Möglich ist bei Anwendung des Joint-Transmission-Verfahrens (JT) bei der Erzeugung der Sendesignale und des Joint-Detection-Verfahrens (JD) insbesondere zu berücksichtigen, dass zwischen allen Sendeantenne und allen Empfangsantennen jeweils Funkkanäle bestehen, die bei Bedarf optional als signalunterdrückende Übertragungsstrecken verwendet werden können. Dies ermöglicht eine Filterwirkung, die wiederum insbesondere bei einem Mischbetrieb mit verschiedenen Empfängereinrichtungen vorteilhaft ist.

Zur Umsetzung eines derartigen Verfahrens werden die Sendesignale zweckmäßigerweise durch den Aufbau einer sogenannten Modulatormatrix erzeugt, die einen Datensignalvektor linear auf einen Sendesignalvektor abbildet. In einer solchen Modulatormatrix können verschiedenartigste Einflüsse auf das Sendesignal bzw. bereits vorhergehende Einflüsse durch die Anordnung verschiedener Sendeeinrichtungen und/oder verschiedener Sendeantennen und deren Strahlcharakteristika und so weiter berücksichtigt werden. Weiterhin können spezielle empfängerseitige Verarbeitungsmöglichkeiten empfangener Signale in einer solchen Modulatormatrix berücksichtigt werden. Für einzelne Empfangseinrichtungen, die mit einer Sendeeinrichtung kommunizieren, können dabei spezielle Modulator-Submatrizen aufgebaut werden, die in die Modulatormatrix eingehen oder beim Erzeugen der Sendesignale zusammen mit der Modulatormatrix verarbeitet werden. Die Einflüsse einer empfängerseitigen Verarbeitung empfangener Sendesignale können dabei insbesondere auch als lineare Operationen durch eine sogenannte Demodulatormatrix beschrieben und beim senderseitigen Signalerzeugungsprozess berücksichtigt werden.

Vorteilhafterweise ist bei einem derartigen System auch eine Vielzahl von Gütekriterien berücksichtbar, wobei insbesondere die Minimierung der erforderlichen Sendeleistung im Verhältnis zu empfängerseitig erhaltenen Qualität der rekonstruierten Daten als Gütekriterium herangezogen werden kann. Derartige Gütekriterien können zweckmäßigerweise bei einer vektoriellen Darstellung der Sendesignale als quadratische Formen verwendet werden. Dabei wird die Transponierte des Vektors des Sendesignals mit einer Gütematrix und wiederum mit dem Vektor des Sendesignals multipliziert, woraus ein skalarer Wert entsteht, der als Gütemaß extremiert bzw. minimiert wird.

Eine Sendeeinrichtung zum Durchführen derartiger Verfahren weist zweckmäßigerweise eine Speichereinrichtung mit einem Speicherraum auf, in dem Modulatormatrizen, ermittelte oder mitgeteilte Einflüsse auf einer Funkschnittstelle usw. abgespeichert werden können, um diese bei einer späteren Verarbeitung berücksichtigen zu können.

Empfangseinrichtungen, die für einen Betrieb im JD- oder JT-System ausgelegt sind, können zweckmäßigerweise eine Sendeeinrichtung aufweisen, die neben den üblichen Sendesignalen auch eine Information aussenden, um die Fähigkeit als JD- bzw. JT-Empfangseinrichtung zu arbeiten zu signalisieren. Damit ist es möglich, JT-Sendeeinrichtungen in derzeit üblichen Kommunikationssystemen anstelle der in diesen Systemen üblichen Basisstationen einzusetzen und als Standard die Kombination mit den üblichen JD-Empfangseinrichtungen vorzugeben. Trotzdem ist es für eine solche JT-Sendeeinrichtung möglich, mit der systemeigenen JT-Empfangseinrichtung in der systemeigenen Art und Weise zu kommunizieren, nachdem sie eine entsprechende Information von der Empfangseinrichtung erhalten hat.

Ein Ausführungsbeispiel wird nachfolgend anhand der Zeichnung näher erläutert. Es zeigen:

Fig. 1     schematisch eine Anordnung von Sende- und Empfangseinrichtungen eines gemischten JT- und JD- Kommunikationssystems, und

Fig. 2     eine Tabelle, die einer Computersimulationsrechnung zugrunde gelegt wurde.

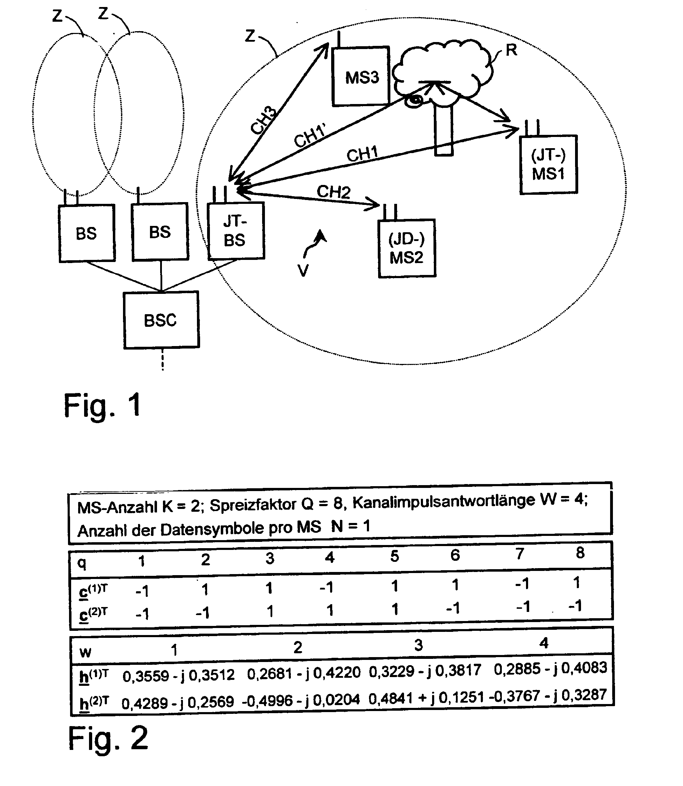

Wie aus Fig. 1 ersichtlich, weist ein FunkKommunikationssystem gemäß dem UMTS-Standard, aber auch einem beliebigem anderen Telekommunikationsstandard, oder einem Standard für Funk-Datennetze, beispielsweise WLAN (Wireless Local Area Network), eine Vielzahl von einzelnen Einrichtungen auf. Typische Funk-Kommunikationsnetze bestehen u.a. aus zentralen Netzeinrichtungen, von denen hier lediglich eine Basisstations-Steuereinrichtung BSC dargestellt ist, die den Betrieb einer Vielzahl einzelner Basisstationen BS, JT-BS steuert und koordiniert. Jede der Basisstationen BS, JT-BS bedient über eine oder mehrere Antennen jeweils eine oder mehrere Funkzellen Z. Mobile oder ortsfeste Stationen MS, JT-MS, JD-MS innerhalb dieser Funkzelle Z können mit der entsprechenden Basisstation JT-BS über eine Funkschnittstelle V kommunizieren.

Dabei können einzelne Funkkanäle CH1, CH1', CH2 bzw. CH3 zwischen einer oder mehrerer Antennen von einer oder mehreren Basisstationen JT-BS, in derem Bereich sich die entsprechenden mobilen Stationen MS, JT-MS, JD-MS befinden, und diesen mobilen Stationen MS, JT-MS, JD-MS aufgebaut werden. Insbesondere ist es möglich, dass eine Funkverbindung zwischen zwei Stationen über mehrere Kanäle CH1, CH1' aufgebaut werden kann. Dies kann beispielsweise zwischen einer Vielzahl von einzelnen Antennen auf einer oder beiden Stationsseiten erfolgen oder aber auch durch Reflektionen an seitlich des eigentlichen direkten Strahlweges befindlichen Reflektoren R.

Eine beispielhafte Anwendung des bevorzugten Verarbeitungsverfahren und seiner Varianten bzw. Alternativen wird nachfolgend anhand des Beispiels eines TDD-Verfahrens (TDD: Time Division Duplex) mit Einteilung der Zeit als Ressource auf der Funk-Schnittstelle erläutert, wobei im Idealfall senderseitig ein Joint Transmission-Verfahren JT und empfängerseitig ein Joint Detection-Verfahren JD angewendet wird. Die Anwendung dieser beiden Verfahren kann nur in einer Richtung, zum Beispiel von den Basisstationen JT-BS aus zu den mobilen Stationen JT-MS, MS, JD-MS durchgeführt werden, kann jedoch auch in umgekehrter Richtung durchgeführt werden, falls die entsprechenden Sendereinrichtungen der mobilen oder ortsfesten teilnehmerseitigen Stationen entsprechende Möglichkeiten bieten. Vorteilhafterweise soll dabei auch eine senderseitige Minimierung der Energie des übertragenen Signals bewirkt werden.

Ausgegangen wird dabei von der Fähigkeit einzelner teilnehmerseitiger Stationen bzw. hier einzelner Empfangseinrichtungen, die das für sich bekannte JD-Verfahren (JD: Joint-Detection) für zeitlich unterteilte CDMA-Systeme anwenden können (CDMA: Code Division Multiple Access). Dies führt zu für sich bekannten Luftschnittstellenkonzepten, wie dem JD-CDMA. Auch bei zeitschlitz-gestützten Verfahren, wie dem TD-CDMA (Time Division Code Division Multiple Access) kann die Luftschnittstelle V für die TDD-Bänder von beispielsweise UMTS das Joint Detection-Verfahren als eine Option zulassen, was die Beseitigung von Interferenzen aufgrund eines intrazellulären Mehrfachzugriff-Verfahrens (Intracell Multiple Access Interference) und von Intersymbol-Interferenzen ermöglicht. Da in vielen Anwendungsfällen von TD-CDMA, beispielsweise Webbrowsing, bei der Übertragung in Abwärtsrichtung von der Basisstation BS, JT-BS zu den teilnehmerseitigen Stationen MS, JT-MS, JD-MS höhere Datenraten zu unterstützen sind, als in Aufwärtsrichtung (Uplink), soll die Leistungsfähigkeit insbesondere der Verbindung in Abwärtsrichtung (Downlink) verbessert werden. Dies wird durch die nachfolgend beschriebene Kombination des konventionellen JD-CDMA mit dem JT-Schema (JT: Joint Transmission), d.h. einer kombinierten Sendesignalerzeugung, gelöst, wobei für diese Kombination die Kenntnis des Zustands eines senderseitig gesendeten Sendesignals beim Empfang durch die Empfangseinrichtungen erforderlich ist. Diese Kenntnis kann beispielsweise durch einprogrammierte Vorgaben für sendeseitige und regionale Grundbedingungen erfolgen, kann aber auch durch Schätzverfahren und/oder Rückübertragungen seitens der empfangsseitigen Einrichtungen MS zu den sendeseitigen Einrichtungen JT-BS erfolgen. Insbesondere ist auch eine Schätzung mit Hilfe von erfassten Einflüssen auf aufwärts gerichtete Signale und der Funkkanäle in Aufwärtsrichtung möglich.

Eine bevorzugte rechentechnisch umsetzbare Lösung wird nachfolgend beschrieben. Dabei wird von einer üblichen JD-CDMA-Abwärtsverbindung ausgegangen, wo eine Basisstation JT-BS als Sendeinrichtung eine Vielzahl von Empfangseinrichtungen in Form von mobiler Stationen MSk mit k=1...K unterstützt. Die für die einzelnen Empfangseinrichtungen MSk, hier (JT-) MS1, (JD-) MS2 und MS3 zu übertragenden Daten werden als K partielle Datenvektoren $\underline{d}^{(k)}$ mit hier K=3 bereitgestellt. Diese Form der vektoriellen Bereitstellung von Datenvektoren ermöglicht eine Gesamt-Datenvektordarstellung in der Form

$$\underline{d} = \left( \underline{d}^{(1)^T} ... \underline{d}^{(K)^T} \right)^T \qquad (1)$$

Dabei wird der Gesamt-Datenvektor $\underline{d}$ durch die Transponierte T der einzelnen Transponierten der einzelnen Datenvektoren $\underline{d}^{(k)T}$ gebildet. Dabei kann auch berücksichtigt werden, dass in modernen Systemen sowohl die Sendeeinrichtungen JT-BS als auch die Empfangseinrichtungen MSk mehr als eine Antenne aufweisen.

Zum Ausbilden eines gemeinsamen Sendesignals $\underline{s}$ für alle einzelnen zu übertragenden Daten $\underline{d}$ wird eine sogenannte Modulatormatrize $\underline{M}$ verwendet. Diese Modulatormatrize $\underline{M}$ wird zuvor gebildet und berücksichtigt die verwendeten CDMA-Codes und auch die Antennenwichtungen, falls mehrere Sendeantennen senderseitig verwendet werden. Möglich ist auch die Berücksichtigung weiterer senderseitig bekannter Einflüsse im senderseitigen Bereich und im Bereich der Funkschnittstelle V. Das Gesamt-Sendesignal $\underline{s}$ wird durch die Multiplikation des Gesamt-Datenvektors $\underline{d}$ mit der Modulatormatrix $\underline{M}$ ausgebildet:

$$\underline{s} = \underline{M}\,\underline{d}. \qquad (2)$$

Die Kanalimpulsantworten zwischen einzelnen Antennen der Sendeinrichtung JT-BS und der Empfangseinrichtungen JT-MS1, JD-MS2, MS3 bzw. MSk, k = 1...K kann durch die partielle Kanalmatrix $\underline{H}^{(k)}$ ausgedrückt werden. Das gewünschte Empfangssignal $\underline{e}$, dass bei den Empfangseinrichtungen MSk einfallen soll, wird dann gegeben durch

$$\underline{e}^{(k)} = \underline{H}^{(k)}\,\underline{s} = \underline{H}^{(k)}\,\underline{M}\,\underline{d}, \qquad (3)$$

wobei das Sendesignal $\underline{s}$ im mittleren Term dieser Formel (3) durch den Ausdruck der vorstehenden Formel (2) ersetzt wird, um den rechtsseitigen Term der Formel (3) zu erhalten. Bei einer Empfangseinrichtung MSk wird im Idealfall das Empfangssignal $\underline{e}^{(k)}$ der Formel (3) erhalten, das mit entsprechenden Verarbeitungsschritten zu einem Datenvektor $\underline{d}'$ verarbeitet wird. Dabei kann zum Durchführen des Joint Detection-Verfahrens ein Minimierungsalgorithmus oder dergleichen angewendet werden. Die Abschätzung der Empfangsdaten ergibt sich dabei gemäß nachfolgender Formel (4)

$$\underline{d}' = \left( \left( \underline{H}^{(k)}\underline{M} \right)^T \underline{H}^{(k)}\underline{M} \right)^{-1} \left( \underline{H}^{(k)}\underline{M} \right)^T \underline{e}^{(k)} \qquad (4)$$

die mit auf für sich üblichen mathematischen Wegen zu lösen ist. Bei Betrachtung des rekonstruierten partiellen Gesamtdatenvektors $\underline{d}'^{(k)}$ entspricht dies

$$\underline{d}'^{(k)} = \cdot \underbrace{\left[\left(\left(\underline{H}^{(k)}\underline{M}\right)^{\bullet T}\underline{H}^{(k)}\underline{M}\right)^{-1}\left(\underline{H}^{(k)}\underline{M}\right)^{\bullet T}\right]_{kN}^{(k-1)N+1}}_{\underline{D}(k)} e(k) \ldots \quad (5)$$

wobei die gewünschten rekonstruierten Datenvektoren $\underline{d}'^{(k)}$ der einzelnen Empfangseinrichtungen MSk als ein rekonstruierter Gesamt-Datenvektor $\underline{d}'$ dargestellt sind. Der Ausdruck in eckigen Klammern $[.]_i^j$ steht dabei für eine Demodulatormatrize $\underline{D}^{(k)}$, welche die einzelnen partiellen Datenvektoren $\underline{d}^{(k)}$ für die einzelnen Empfangseinrichtungen MSk berücksichtigt. Die Demodulatormatrize $\underline{D}^{(k)}$ besteht dabei aus Zeilen i bis j für den Ausdruck in eckigen Klammern.

Unabhängig davon hat die Matrize $\left(\left(\underline{H}^{(k)}\underline{M}\right)^T\underline{H}^{(k)}\underline{M}\right)^{-1}\left(\underline{H}^{(k)}\underline{M}\right)^{\bullet T(k)}$, die beim konventionellen Joint Detection-Verfahren verwendet wird, obwohl dies aufgrund der Versorgung durch die JT-Sendeeinrichtung JT-BS nicht zwingend erforderlich wäre, auch das Potential, dass bei einer einzelnen Empfangseinrichtung MSk auch Daten erfasst werden können, die für diese Empfangseinrichtung MSk nicht von Interesse sind. Dieses Merkmal der konventionellen JD-CDMA-Verfahrensweise kann als eine nicht erforderliche Beschränkung beim Erzeugen des Sendesignals $\underline{s}$ angesehen werden.

Anstelle das Sendesignal $\underline{s}$ nach vorstehender Formel (2) zu erzeugen, was auch zu einer Erfassung von irrelevanten Daten bei den einzelnen Empfangseinrichtungen MSk führen würde, sollte das Gesamt-Sendesignal $\underline{s}$ daher vorteilhafterweise unter Berücksichtigung nur der Daten $\underline{d}^{(k)}$ für eine bestimmte Empfangseinrichtung MSk erzeugt werden, die für diese bestimmte Empfangseinrichtung MSk von Interesse sind. Dies bietet vorteilhafterweise zusätzliche Freiheitsgrade beim Erzeugen des Gesamt-Sendesignals $\underline{s}$. Insbesondere wird auch eine weitere Verbesserung des empfängerseitigen Empfangssignals $\underline{e}$ durch eine entsprechende senderseitige Berücksichtigung bekannter Faktoren ermöglicht.

Beispielsweise kann der gewonnene Freiheitsgrad vorteilhafterweise verwendet werden, um die erforderliche Sendeleistung zu minimieren und folglich die Interferenz für die einzelnen Empfangseinrichtungen MSk, die nicht zu dem Ensemble der mit dem Sendesignal $\underline{s}$ zu erreichenden K Empfangseinrichtungen MSk, k=1...K gehören, minimiert werden.

Eine Verbesserung des für sich bekannten Joint Detection-Verfahrens wird für insbesondere die Übertragung in Abwärtsrichtung durch den Einsatz des ebenfalls für sich bekannten Joint Transmission-Verfahrens möglich. Dabei werden die Demodulatoren bzw. Demodulatormatrizen $\underline{D}^{(k)}$ für die Empfangseinrichtungen MSk, k=1...K in der Form von für die Empfangseinrichtungen MSk spezifischen partiellen Demodulatormatrizen $\underline{D}^{(k)}$ bestimmt bzw. abgeschätzt. Diese Demodulatormatrizen $\underline{D}^{(k)}$ dienen zusammen mit den partiellen Kanalmatrizen bzw. Matrizen für Einflüsse $\underline{H}^{(k)}$ auf der Funkschnittstelle V, wie bereits vorstehend erläutert, als Eingabeparameter für die a-Posteriori-Bestimmung einer Modulatormatrize $\underline{M}$, die im allgemeinen zu der Modulatormatrize bei konventionellen Joint Detection-Verfahren verschieden ist, wie bei konventioneller JD-CDMA-Verfahrensweise verwendet wird.

In vorteilhafter Ausgestaltung können die Demodulatormatrizen $\underline{D}^{(k)}$ aus Formel (5) als die partiellen Demodulatormatrizen eines Übertragungssystems angesehen werden, dass das Joint-Transmission-Verfahren unterstützt. Dabei können die partiellen Demodulatormatrizen $\underline{D}^{(k)}$ eines Joint Transmission-Systems in einer Blockdiagonalen-Matrize angeordnet werden, die als die Gesamt-Demodulatormatrize

$$\underline{D} = \text{blockdiag}\left(\underline{D}^{(1)}...\underline{D}^{(K)}\right) \ldots \quad (6)$$

ausgebildet werden kann. Die partiellen Matrizen für Einflüsse $\underline{H}^{(k)}$ auf der Funkschnittstelle V bilden eine entsprechende Gesamt-Einfluss-Matrize für Funkschnittstelleneinflüsse

$$\underline{H} = \left(\underline{H}^{(1)T}...\underline{H}^{(K)T}\right)^T. \quad (7)$$

aus. Entsprechend der Vorgehensweise beim für sich bekannten Joint Transmission-Verfahren oder beim für sich bekannten Predistortion-Verfahren für Vorentzerrungen werden die Demodulatormatrize $\underline{D}$ aus der Formel (6) und die

Matrize für Einflüsse $\underline{H}$ auf der Funkschnittstelle V aus der Formel (7) verwendet, um die Modulatormatrize $\underline{M}$ für das Joint Transmission-Verfahren auszubilden

$$\underline{M} = (\underline{DH})^{*T}\left(\underline{DH}(\underline{DH})^{*T}\right)^{-1}. \qquad (8)$$

Falls das Gesamt-Sendesignal $\underline{s}$ aus Formel (2) unter Verwendung einer a posteriori bestimmten Modulatormatrize $\underline{M}$ gemäß Formel (8) anstelle der apriori bestimmten Modulatormatrize einer konventionellen JD-CDMA-Verfahrensweise erzeugt wird, dann ist es insbesondere auch möglich, die übertragene Gesamtenergie $\|\underline{s}\|^2/2$ minimiert wird. Für die Minimierung können wiederum für sich bekannte mathematische Verfahren verwendet werden.

Bei einer ersten Computersimulation wurden die in der Tabelle aus Figur 2 angegebenen Parameter verwendet, wobei zwei einfache beispielhafte Abwärtsverbindungssysteme unter Verwendung konventioneller JD-CDMA-Verfahrensweise bzw. der vorgeschlagenen Kombination von Joint Detection (JD) und Joint Transmission (JT) berücksichtigt wurden. Die Anzahl der Empfangseinrichtungen MSk betrug dabei K = 2, der Spreizfaktor q wurde mit der Gesamtlänge Q = 8 festgelegt, die Länge der Kanalimpulsantworten w betrug W = 4 und die Anzahl von Datensymbolen n pro Empfangseinrichtung betrug N = 1. Die verwendeten CDMA-Codes $\underline{c}^{(1)}$ und $\underline{c}^{(2)}$ wie auch die verwendeten Kanalimpulsantworten $\underline{h}^{(1)}$ bzw. $\underline{h}^{(2)}$ können direkt den entsprechenden Zeilen der Tabelle entnommen werden. Die Computersimulationen dieser beiden Systeme ergaben als erforderliche Sendeenergie:

$$\|\underline{s}\|^2/2 = 8,00 \quad \text{für konventionelles JD bzw.}$$
$$\|\underline{s}\|^2/2 = 1,76 \quad \text{für JT + JD.} \qquad (9)$$

Die Ergebnisse zeigen deutlich, dass die vorgeschlagene Kombination von JD und JT mit dem erzielten Rechenwert von 1,76 gegenüber dem Rechenwert von 8,00 bei konventioneller JD deutliche Einsparungsmöglichkeiten hinsichtlich der Sendeenergie bzw. der Sendeleistung bietet. Bei diesem Beispiel beträgt die Einsparung annäherungsweise 6,5 dB.

Wie bereits angemerkt, ist eine Übertragung theoretisch auch auf Funkverbindungen in Aufwärtsrichtung möglich. Weiterhin ist eine Beschränkung auf das beschriebene UMTS nicht erforderlich. Eine Übertragung auf andere Funk-Kommunikationssysteme einschließlich lokaler Datennetze ist ebenfalls denkbar.

Hinsichtlich der mathematischen Vorgehensweise ist allgemein festzustellen, dass in dem Signalentwurfsprozess die Kenntnis über Einflüsse $\underline{H}$ auf der Funkschnittstelle V und optional auch Kenntnis über Verarbeitungen in der bzw. den Empfangseinrichtungen MS, JT-MS, JD-MS eingeht. Es wird nicht mehr wie beim üblichen JD ein Sendesignal $\underline{s}$ unter Berücksichtigung von starren Regeln für eine Sendesignalerzeugung erzeugt, wobei vorgeschrieben wird, wie ein Sendesignal $\underline{s}$ allgemein auszusehen hat, sondern es wird ein Sendesignal $\underline{s}$ unter Berücksichtigung von Parametern erzeugt, die ein Sendesignal $\underline{s}$ erzeugen lassen, welches bereits Korrekturen für zu erwartende Einflüsse auf der Funkschnittstelle V und/oder in den Empfangseinrichtungen berücksichtigt. Im Idealfall werden somit bei der Erzeugung des Sendesignals $\underline{s}$ sämtliche zu erwartenden Störeinflüsse beseitigt, so dass eine Empfangseinrichtung ein unverzehrtes Empfangssignal $\underline{e}$ empfangen kann.

Zweckmäßigerweise erfolgt dazu die Beschreibung der zu versendenden bzw. zu übertragenden Daten in vektorieller Darstellung, was die Anwendung linearer Prozesse und den Aufbau von Modulatormatrizen $\underline{M}$ und dergleichen ermöglicht. Die Modulatormatrize $\underline{M}$ bildet somit Vektoren $\underline{d}$ auf Vektoren $\underline{s}$ linear ab.

Für die weitere Optimierung des Sendesignals $\underline{s}$ kann ein Gütekriterium, zum Beispiel die Minimierung der Gesamt-Sendeenergie eingeführt werden, wobei das Gütekriterium wiederum in Form einer Matrize $\underline{G}$ darstellbar ist. Besonders vorteilhaft ist dabei die Darstellung als quadratische Form, wobei ein Vektor für das Sendesignal $\underline{s}$ als dessen konjungiertkomplexe Transponierte $\underline{s}^{*T}$ mit der Gütematrize $\underline{G}$ und dann wiederum mit sich selbst ($\underline{s}$) multipliziert wird, um eine Gütegröße bzw. das eigentliche Kriterium z ($z = \underline{s}^{*T}\,\underline{G}\,\underline{s}$) zu erhalten. Das Gütekriterium z ist eine skalare Größe, wobei die Minimierung mit üblichen Verfahren durchführbar ist.

Vorteilhafterweise kann auch ein Mischbetrieb ermöglicht werden. Bei dem in der Figur dargestellten Ausführungsbeispiel sind an der Basisstations-Steuereinrichtung BSC zwei herkömmliche Basisstationen BS eines üblichen UMTS und zusätzlich eine für das vorstehend beschriebene Verfahren eingerichtete Joint Detection-Basisstation JT-BS angeschlossen. Die Joint Detection-Basisstation JT-BS befindet sich somit in einer eigentlich systemfremden Umgebung. Üblicherweise würde in diesem System lediglich eine Kommunikationsverbindung zu herkömmlichen Empfangseinrichtungen entweder MS3 oder JD-MS2 aufgebaut. Dabei sind die einfachen herkömmlichen Mobilstationen MS3 ohne spezielle Verarbeitungsmöglichkeiten ausgestattet und machen üblicherweise dass für sich bekannte Predestortion-Verfahren erforderlich. Die Mobilstationen für eine spezielle Verarbeitung empfangener Signale $\underline{e}$ sind vor-

liegend Joint Detection-Empfangseinrichtungen JD-MS2 und ermöglichen eine Verarbeitung eines Empfangssignals $\underline{e}$ unter Berücksichtigung von Einflüssen $\underline{H}$ auf der Funkschnittstelle V beim Erzeugen der rekonstruierten Daten $\underline{d}'$. Diese Empfangssignale $\underline{e}$ speziell verarbeitenden Empfangseinrichtungen JD-MS2 empfangen üblicherweise Sendesignale $\underline{s}$ der herkömmlichen Basisstationen BS, wobei die Sendesignale $\underline{s}$ gemäß den üblichen Signalerstellungsregeln erzeugt wurden.

Zweckmäßigerweise wird für die in das System als systemfremde Station eingebrachte Joint Transmission-Basisstation bzw. Join Transmission-Sendeeinrichtung JT-BS entsprechend standardmäßig vorgegeben, dass diese mit den für das System UMTS üblichen Empfangseinrichtungen MS3, JD-MS2 zu kommunizieren hat. Entsprechend können die empfängerseitigen Verarbeitungen bzw. Nicht-Verarbeitungen bei diesen Empfangseinrichtungen senderseitig trotzdem richtig berücksichtigt werden.

Wie die vorstehend beschriebene Computersimulation gezeigt hat, ist es jedoch besonders vorteilhaft, wenn die Joint Detection-fähige Joint Transmission-Sendeeinrichtung JT-BS nicht nur für die einfachen Empfangseinrichtungen MS3 ohne weitere Empfangssignalverarbeitung sondern auch für die speziell verarbeitenden Empfangseinrichtungen JD-MS2 eine Vorverarbeitung bzw. eine Sendesignalerzeugung unter Berücksichtigung der Einflüsse $\underline{H}$ auf der Funkschnittstelle V durchführt. Zweckmäßigerweise kann eine solche Joint Transmission-Sendeeinrichtung JT-BS auch mit speziell für dieses Joint Transmission-System eingerichteten Empfangseinrichtungen JT-MS1 unter Verwendung der für diese idealen Signalerzeugungsbedingungen kommunizieren.

Im Idealfall berücksichtigt somit die Joint Detection-fähige Sendeeinrichtung JT-BS für eine Vielzahl verschiedenartiger Empfangseinrichtungen MS3, JD-MS2, JT-MS1 deren spezielle Empfangssignalverarbeitungen und deren spezielle Empfangscharakteristika. Da bei der Signalerzeugung ein gemeinsames Sendesignal für alle Empfangseinrichtungen innerhalb des Funkbereich der Sendeeinrichtung erzeugt wird, werden für die verschiedenartigen Empfangseinrichtungen jeweils eigene Demodulatormatrizen $\underline{D}^{(k)}$ bereitgestellt, beispielsweise in einem entsprechenden Speicher der Sendeeinrichtung JT-BS.

Neben einem reinen Mischbetrieb, bei dem alle denkbaren Empfangseinrichtungen mit ihren speziellen Anforderungen und Möglichkeiten berücksichtigt werden, ist auch ein gezieltes Schalten zwischen verschiedenen Betriebsarten möglich. Insbesondere ist es möglich, für eine Joint Detection-fähige Empfangseinrichtung JD-MS2 festzulegen, ob bei einer Kommunikation mit dieser alle oder Teile der Einflüsse $\underline{H}$ auf der Funkschnittstelle V und/oder der Verarbeitungsmöglichkeiten innerhalb dieser Empfangseinrichtung JD-MS2 nur in dieser Empfangseinrichtung JD-MS2 berücksichtigt werden sollen, oder ob eine Überkorrektur bzw. Doppelkorrektur vorgenommen werden soll. Im ersten Fall wird der Joint Detection-Modus in der Sendeeinrichtung für die Kommunikation mit dieser speziellen Joint Detection-Empfangseinrichtung JD-MS2 abgeschaltet. Im zweiten Fall wird beim Erzeugen der Signalkomponente $\underline{s}^{(k)}$ die empfängerseitige Verarbeitung des Empfangssignals bestimmt bzw. abgeschätzt und mit dieser Kenntnis eine weitere Korrektur unter Berücksichtigung der selben oder weiterer Einflüsse beim Erzeugen der Sendesignalkomponente $\underline{s}^{(k)}$ und/oder des Gesamt-Sendesignals $\underline{s}$ durchgeführt.

Bei der Erzeugung des Gesamt-Sendesignals oder der einzelnen Sendesignalkomponenten kann eine Vielzahl von Parametern berücksichtigt werden. Dazu zählt insbesondere auch die Tatsache, dass bei einer Vielzahl verwendbarer Funkkanäle CH1, CH1', CH2, CH3 alle oder einzelne dieser ideal oder suboptimal unterdrückt werden können, wenn diese als Signalunterdrückende Übertragungsstrecken betrieben werden.

Ferner kann berücksichtigt werden, dass einzelne oder alle Empfangseinrichtungen bzw. Empfangsstationen Signale empfangen, die durch eine empfangsstationsspezifische, gruppenweise oder für die Gesamtheit aller Empfangseinrichtungen gleichgewählte Verkettung einer linearen Operation und optional mindestens einer nicht linearen Operation verarbeitet werden können, wobei beispielsweise ein Viterbi-Decoder einsetzbar ist. Bei der Verkettung können auch erwartungstreue Gaußschätzer (Zero Forcing Block Linear Equalizer), Minimum-Varianz-Schätzer (Minimum Mean Square Error Block Linear Equalizer), signalangepasste Filter, diese optional mit Abtasteinrichtung, kombinierte Kanalimpulsantworten, wirksame Funkkanäle, aus CDMA-Codes abgeleitete signalangepasste Filter und Gütekriterien berücksichtigt werden.

Bei einem System mit eigenständiger erfinderischer Bedeutung wird auch berücksichtigt, dass verschiedene Empfangseinrichtungen von einer Sendeeinrichtung gemeinsam mit einem Gesamt-Sendesignals $\underline{s}$ versorgt werden, wobei diese Empfangseinrichtungen JT-MS1, JD-MS2, MS3 zu verschiedenen Systemen oder System-Ausgestaltungen gehören. Dies bedingt insbesondere, dass beispielsweise bei Joint Transmission-Empfangseinrichtungen JT-MS1 ein Sendesignal derart erzeugt wird, dass die Empfangseinrichtung JT-MS1 keinerlei weitere spezifisch spezielle Verarbeitung des empfangenen Signals vornehmen muss. Vorteilhafterweise kann jedoch vorgesehen werden, dass sich eine solche einfache Empfangseinrichtung durch ein entsprechendes Signal bei der Sendeeinrichtung zu erkennen geben kann, damit diese Empfangseinrichtung als solche mit ihren speziellen Fähigkeiten berücksichtigt werden kann.

Während eine einfache Empfangseinrichtung direkt Empfangssignale $\underline{e}$ erhalten muss, die sie ohne weitere spezielle Verarbeitung in Empfangsdaten $\underline{d}$ umsetzen kann, ist es für andere Typen von Empfangseinrichtungen JD-MS2 erforderlich, dass diese Zusatzinformationen erhalten, um beispielsweise Kanalverzerrungen bestimmen zu können. Derartige Zusatzinformationen sind beispielsweise sogenannte Mittambeln, die senderseitig in das Sendesignal eingesetzt werden. Da in den Empfangseinrichtungen JD-MS2 Signalform, Signalverlauf und dergleichen der Mittambeln bekannt ist, kann anhand einer Verzerrung einer empfangenen Mittambeln auf die Verzerrung auch der weiteren Daten des Empfangssignals **e** geschlossen werden, um nachfolgend eine entsprechende Korrektur beim Erstellen der rekonstruierten Daten **d'** vorzunehmen. Da eine herkömmliche Joint Transmission-Sendeeinrichtung JT-BS das Einsetzen derartiger Zusatzinformationen in das Sendesignal **s** nicht vorsieht, ist es zweckmäßig, entsprechende Verfahrensschritte vorzusehen, mit denen derartige Zusatzsignale oder auch andere empfängerseitig erforderliche Zusatzinformationen in die Sendesignale eingearbeitet werden. Natürlich ist auch eine parallele Übertragung derartiger Zusatzinformationen oder eine zeitlich versetzte Übertragung solcher Zusatzinformationen möglich.

Durch das Übertragen von Zusatzinformationen direkt im Sendesignal **s** oder über andere Wege kann eine Sendeeinrichtung JT-BS vorteilhaferweise auch Anweisungen an einzelne Empfangseinrichtungen JD-MS2 übertragen, wobei mit solchen Zusatzinformationen Anweisungen zum speziellen oder nicht-speziellen Verarbeiten der Empfangssignale **e** übermittelt werden. Insbesondere ist es dadurch möglich, einzelnen Empfangseinrichtungen JD-MS2, JT-MS1 die Anweisung zu geben, nur bestimmte Codes, die optional ebenfalls übertragen werden können, oder nur bestimmte Funkkanäle zu berücksichtigen. Auch dies ermöglicht eine weitere Optimierung beim Generieren eines Gesamt-Sendesignals **s.**

**Patentansprüche**

1. Verfahren zum Übertragen von Daten über eine Funk-Schnittstelle (V) in einem Kommunikationssystem (UMTS; WLAN) zwischen zumindest einer Sendereinrichtung (JT-BS) mit zumindest einer Sendeantenne und zumindest einer Empfangseinrichtung (JT-MS) mit zumindest einer Empfangsantenne über zumindest einen Funkkanal (CH) auf der Funk-Schnittstelle (V) zwischen den Sende- und Empfangsantennen, bei dem

   - senderseitig die zu übertragenden Daten (**d**) unter Berücksichtigung von Informationen (**M**, **H**, **D**) über zumindest ein gewünschtes Empfangssignal (**e**) zu zumindest einem Sendesignal (**s**) verarbeitet und anschließend über die Funk-Schnittstelle (V) übertragen werden und
   - empfängerseitig nach entsprechender Verarbeitung empfangener Signale rekonstruierte ursprüngliche Daten (**d'**) ausgegeben werden,
   - senderseitig die zu übertragenden Daten (**d**) als Sendesignale (**s**) unter Berücksichtigung von Informationen über eine spezielle empfängerseitige Verarbeitungsmöglichkeit (**D**), insbesondere empfängerseitige Verarbeitungsmöglichkeit von Informationen (**H**) über Einflüsse auf der Funk-Schnittstelle (V) erzeugt werden,

   **dadurch gekennzeichnet, dass**

   - senderseitig eine Zusatzinformation bezüglich der Sendesignale (**s**) oder deren Verarbeitung in die Sendesignale (**s**) eingearbeitet oder getrennt zu diesen erzeugt und übertragen wird und
   - empfängerseitig die Verarbeitung empfangener Signale (**e**) unter Berücksichtigung der Zusatzinformation bezüglich der Sendesignale (**s**) durchgeführt wird.

2. Verfahren nach Anspruch 1, bei dem

   - senderseitig bei fehlender oder nicht empfangener Information über die spezielle empfängerseitige Verarbeitungsmöglichkeit die zu übertragenden Daten (**d**) als Sendesignale (**s**) erzeugt werden, die von üblichen Empfangseinrichtungen (MS) ohne speziell erweiterte Verarbeitungsmöglichkeit der empfangenen Signale (**e**) in für diese Empfangseinrichtungen (MS) üblicher Art und Weise verarbeitet werden können.

3. Verfahren nach Anspruch 1 oder 2, bei dem als Zusatzinformation Daten übertragen werden, die von den zu übertragenden Daten (**d**) unabhängig sind, insbesondere Mittambeln, Code-Zuordnungsinformationen und/oder zusätzliche Datenanteile, insbesondere anderer Übertragungssysteme, übertragen werden.

4. Verfahren nach einem vorstehenden Anspruch, bei dem die Zusatzinformation bei Übertragung der Sendesignale (**e**) an eine Vielzahl von gemeinsam detektierenden bzw. verarbeitenden Empfangseinrichtungen (JD-MS, JT-MS) bestimmte dieser Empfangseinrichtungen (JD-MS, JT-MS) anweist, die empfangenen Signale (**e**) nicht oder speziell zu verarbeiten.

5. Verfahren nach einem vorstehenden Anspruch, bei dem die Zusatzinformation bei Übertragung der Sendesignale (**s**) bestimmte Empfangseinrichtungen (JD-MS) anweist, nur bestimmte Anteile, insbesondere mit der Empfangseinrichtung (JD-MS) direkt zugeordneten Codes, der empfangenen Signale ($\underline{e}$) zu verarbeiten.

**6.** Verfahren nach einem der Ansprüche 1 - 5, bei dem

- im Fall einer Empfangseinrichtung (JD-MS) mit einer Verarbeitung von Empfangssignalen ($\underline{e}$) unter Berücksichtigung von Informationen ($\underline{H}$) über Einflüsse auf der Funk-Schnittstelle (V), insbesondere über wirksame Funkkanäle (CH)
- senderseitig bei der Erzeugung von Sendesignalen ($\underline{s}$) die Verwendung der entsprechenden Informationen ($\underline{H}$) über die empfängerseitig berücksichtigten Einflüsse auf der Funk-Schnittstelle (V) ausgeschlossen werden.

**7.** Verfahren nach einem der Ansprüche 1 - 5, bei dem

- im Fall einer Empfangseinrichtung (JD-MS) mit einer Verarbeitung von Empfangssignalen ($\underline{e}$) unter Berücksichtigung von Informationen ($\underline{H}$) über Einflüsse auf der Funk-Schnittstelle (V), insbesondere über wirksame Funkkanäle (CH)
- senderseitig bei der Erzeugung von Sendesignalen ($\underline{s}$) die Wirkung der empfängerseitigen Verwendung der entsprechenden Informationen ($\underline{H}$) über die Einflüsse bestimmt oder abgeschätzt und
- senderseitig eine zusätzliche Optimierung des Sendesignals ($\underline{s}$) unter zusätzlicher Berücksichtigung der Informationen ($\underline{H}$) über diese Einflüsse für diese Empfangseinrichtung (JD-MS) durchgeführt wird.

**8.** Verfahren nach einem vorstehenden Anspruch, bei dem senderseitig im Fall verschiedenartiger Empfangseinrichtungen (JD-MS, JT-MS) an der zumindest einen Sendeeinrichtung (JT-BS) für die einzelnen Empfangseinrichtungen (JD-MS, JT-MS) jeweils für diese geeignete Sendesignalkomponenten ($\underline{s}_k$) bestimmt und ein gemeinsames Sendesignal ($\underline{s}$) für alle diese Empfangseinrichtungen (JD-MS, JT-MS) erzeugt wird.

**9.** Verfahren nach einem vorstehenden Anspruch, bei dem die Sendesignale gemäß dem Joint-Transmission-Verfahren erzeugt werden und/oder empfängerseitig empfangene Sendesignale mittels Joint-Detection-Verfahren verarbeitet werden, insbesondere

- zwischen allen Sendeantennen und allen Empfangsantennen Funkkanäle bestehen, die nach Bedarf optional als signalunterdrückende, insbesondere ideal oder suboptimal signalunterdrückende Übertragungsstrecken verwendet werden.

**10.** Verfahren nach einem vorstehenden Anspruch, bei dem das senderseitige Erzeugen der Sendesignale ($\underline{s}$) durch das Anwenden einer Modulatormatrize ($\underline{M}$) auf die zu übertragenden Daten ($\underline{d}$) erfolgt,

- wobei die Modulatormatrize ($\underline{M}$) Einflüsse auf der Funkschnittstelle (V), insbesondere wirksam zu verwendende Kanäle (CH), und/oder spezielle empfängerseitige Verarbeitungsmöglichkeiten empfangener Signale ($\underline{e}$) berücksichtigt und
- wobei vorzugsweise für Empfangseinrichtungen (JT-MS, JD-MS) ohne spezielle Verarbeitung eine oder mehrere dies berücksichtigende spezielle Modulator-Submatrizen bereitgestellt werden.

**11.** Verfahren nach einem vorstehenden Anspruch, bei dem beim Signalerzeugen empfängerseitige Verarbeitungen empfangener Sendesignale und Einflüsse auf diese Sendesignale als lineare Operationen durch eine Demodulatormatrize ($\underline{D}$) beschrieben und beim senderseitigen Signalerzeugungsprozess entsprechen einbezogen werden.

**12.** Verfahren nach einem vorstehenden Anspruch, bei dem zur Optimierung der Signalerzeugung bei der Auswahl verschiedener möglicher Funkkanäle und/oder spezieller Verarbeitungsverfahren für die Daten Gütekriterien (z, $\underline{G}$) berücksichtigt werden, insbesondere Gütekriterien hinsichtlich der Minimierung der erforderlichen Sendeleistung im Verhältnis zur empfängerseitig erhaltenen Qualität der rekonstruierten Daten.

**13.** Verfahren nach einem vorstehenden Anspruch, bei dem bei der Signalerzeugung bei vektorieller Darstellung der Sendesignale ($\underline{s}$) zumindest ein Gütekriterium als quadratische Form verwendet wird.

**14.** Sendeeinrichtung zum Durchführen eines vorstehenden Verfahrens mit

- zumindest einer Sendestation (BS),
- zumindest einer Sendeantenne und

- zumindest einer Verarbeitungseinrichtung (C) zum Verarbeiten von zu übertragenden Daten (**d**) zu Sendesignalen (**s**) unter Berücksichtigung von Informationen über spezielle empfängerseitige Verarbeitungsmöglichkeiten empfangener Signale (e) und zum Übertragen der Sendesignale (**s**) über die Funkschnittstelle (V) derart, dass senderseitig eine Zusatzinformation bezüglich der Sendesignale (**s**) oder deren Verarbeitung in die Sendesignale (**s**) eingearbeitet oder getrennt zu diesen erzeugt und übertragen wird.

15. Empfangseinrichtung (JT-MS) zum Durchführen eines Verfahrens nach Anspruch 1 bis 14, mit

- zumindest einer Empfangsstation (MS),
- zumindest einer Empfangsantenne,
- zumindest einer Verarbeitungseinrichtung zum Verarbeiten von über eine Funkschnittstelle (V) empfangenen Signalen (**e**) zu ursprünglichen Daten (**d**') derart, dass empfängerseitig die Verarbeitung empfangener Signale (**e**) unter Berücksichtigung der Zusatzinformation bezüglich der Sendesignale (**s**) durchgeführt wird, und
- zumindest einer Sendeeinrichtung zum Aussenden einer Information, welche die Verarbeitungsmöglichkeiten für empfangene Signale der Empfangseinrichtung kennzeichnet, an eine Joint Transmission-Sendeeinrichtung (JT-BS).

## Claims

1. Method for transmitting data via a radio interface (V) in a communication system (UMTS; WLAN) between at least one transmitter facility (JT-BS) having at least one transmitting antenna and at least one receiving facility (JT-MS) having at least one receiving antenna via at least one radio channel (CH) on the radio interface (V) between the transmitting and receiving antennas, in which

- at the transmitter end, the data (**d**) to be transmitted are processed to form at least one transmit signal (**s**), taking into consideration information (**M, H, D**) about at least one desired received signal (**e**) and are then transmitted via the radio interface (V), and
- at the receiver end, after corresponding processing of received signals, reconstructed original data (**d**') are output,
- at the transmitter end, the data (**d**) to be transmitted are generated as transmit signals (**s**), taking into consideration information about a special processing capability (**D**) at the receiver end, particularly a processing capability at the receiver end of information (**H**) about influences on the radio interface (V),

**characterized in that**

- at the transmitter end, additional information with respect to the transmit signals (**s**) or their processing is worked into the transmit signals (**s**) or generated separately from these and transmitted, and
- at the receiver end, the processing of received signals (**e**) is carried out taking into consideration the additional information with respect to the transmit signals (**s**).

2. Method according to Claim 1, in which

- at the transmitter end, in the case of missing or unreceived information about the special processing capability at the receiver end, the data (**d**) to be transmitted are generated as transmit signals (**s**) which can be processed by conventional receiving facilities (MS) without specially extended processing capability of the received signals (**e**) in a manner which is usual for these receiving facilities (MS).

3. Method according to Claim 1 or 2, in which, as additional information, data are transmitted which are independent of the data (**d**) to be transmitted, particularly midambles, code allocation information and/or additional data components, particularly of other transmission systems.

4. Method according to a preceding claim, in which the additional information, during the transmission of the transmit signals (**s**) to a multiplicity of jointly detecting or processing receiving facilities (JD-MS, JT-MS), instructs particular ones of these receiving facilities (JD-MS, JT-MS) to not process or to specially process the received signals (**e**).

5. Method according to a preceding claim, in which the additional information, during the transmission of the transmit signals (**s**), instructs particular receiving facilities (JD-MS) to process only particular components, particularly codes directly allocated to the receiving facility (JD-MS), of the received signals (**e**).

6. Method according to one of Claims 1-5, in which,

   - in the case of a receiving facility (JD-MS) with processing of received signals (**e**), taking into consideration information (**H**) about influences on the radio interface (V), particularly about effective radio channels (CH),
   - at the transmitter end, the use of the corresponding information (**H**) about the influences on the radio interface (V) taken into consideration at the receiver end is excluded during the generation of transmit signals (**s**).

7. Method according to one of Claims 1-5, in which,

   - in the case of a receiving facility (JD-MS) with processing of received signals (**e**), taking into consideration information (**H**) about influences on the radio interface (V), particularly about effective radio channels (CH),
   - the effect of the use of the corresponding information (**H**) about the influences at the receiver end is determined or estimated at the transmitter end during the generation of transmit signals (**s**), and
   - at the transmitter end, an additional optimization of the transmit signal (**s**) is carried out additionally taking into consideration the information (**H**) about these influences for this receiving facility (JD-MS).

8. Method according to a preceding claim, in which, at the transmitter end, in the case of different types of receiving facilities (JD-MS, JT-MS), transmit signal components ($\underline{s}_k$) suitable for these are in each case determined for the individual receiving facilities (JD-MS, JT-MS) at the at least one transmitting facility (JT-BS) and a joint transmit signal (**s**) is generated for all these receiving facilities (JD-MS, JT-MS).

9. Method according to a preceding claim, in which the transmit signals are generated in accordance with the joint transmission method and/or transmit signals received at the receiver end are processed by means of joint detection methods, particularly

   - between all transmitting antennas and all receiving antennas, radio channels exist which, if necessary, are used optionally as signal-suppressing, particularly ideally or suboptimally signal-suppressing transmission links.

10. Method according to a preceding claim, in which the generation of the transmit signals (**s**) at the transmitter end takes place by applying a modulator matrix (**M**) to the data (**d**) to be transmitted,

    - wherein the modulator matrix (**M**) takes into consideration influences on the radio interface (V), particularly channels (CH) to be effectively used, and/or special processing capabilities of received signals (**e**) at the receiver end, and
    - wherein, preferably for receiving facilities (JT-MS, JD-MS) without special processing, one or more special modulator submatrices taking this into consideration are provided.

11. Method according to a preceding claim, in which, during the signal generating, processings of received transmit signals at the receiver end and influences on these transit signals are described as linear operations by a demodulator matrix (**D**) and are correspondingly included in the signal generation process at the transmitter end.

12. Method according to a preceding claim, in which, for optimizing the signal generation during the selection of various possible radio channels and/or special processing methods for the data, quality criteria (z, **G**) are taken into consideration, particularly quality criteria with regard to the minimization of the required transmit power with respect to the quality of the reconstructed data obtained at the receiver end.

13. Method according to a preceding claim, in which, during the signal generation, at least one quality criterion is used as quadratic form in the vectorial representation of the transmit signals (**s**).

14. Transmitting facility for carrying out a preceding method, comprising

    - at least one transmitting station (BS),
    - at least one transmitting antenna and
    - at least one processing facility (C) for processing data (**d**) to be transmitted to form transmit signals (**s**) taking into consideration information about special processing capabilities at the receiver end of received signals (**e**) and for transmitting the transmit signals (**s**) via the radio interface (V) in such a manner that, at the transmitter end, additional information with respect to the transmit signals (**s**) or their processing is worked into the transmit signals (**s**) or generated separately from these and transmitted.

**15.** Receiving facility (JT-MS) for carrying out a method according to Claims 1 to 14, comprising

- at least one receiving station (MS),
- at least one receiving antenna,
- at least one processing facility for processing signals (**e**) received via a radio interface (V) into original data (**d'**), in such a manner that the processing of received signals (**e**) is carried out at the receiver end taking into consideration additional information with respect to the transmit signals (**s**), and
- at least one transmitting facility for sending out information, which identifies the processing capabilities for received signals of the receiving facility, to a joint transmission transmitting facility (JT-BS).

**Revendications**

**1.** Procédé pour la transmission de données au moyen d'une interface radio (V) dans un système de communication (UMTS ; WLAN) entre au moins un dispositif émetteur (JT-BS) comprenant au moins une antenne d'émission et au moins un dispositif de réception (JT-MS) avec au moins une antenne de réception par l'intermédiaire d'au moins un canal radio (CH) sur l'interface radio (V) entre les antennes d'émission et les antennes de réception, dans lequel

- côté émetteur, les données (**d**) à transmettre sont converties en tenant compte d'informations (**M**, **H**, **D**) concernant au moins un signal de réception (e) souhaité en au moins un signal d'émission (**s**) et sont transmises ensuite par l'interface radio (V) et
- côté récepteur, des données (**d'**) initiales reconstituées sont éditées après un traitement approprié de signaux reçus,
- côté émetteur, les données (**d**) à transmettre sont générées sous forme de signaux d'émission (**s**) en tenant compte d'informations concernant une possibilité de traitement (**D**) côté émetteur spécial, en particulier une possibilité de traitement côté émetteur d'informations (**H**) par l'intermédiaire d'influences sur l'interface radio (V),

**caractérisé en ce que**

- côté émetteur, une information supplémentaire concernant les signaux d'émission (**s**) ou leur traitement est intégrée dans les signaux d'émission (**s**) ou est générée séparément de ces signaux et est transmise et
- côté émetteur, le traitement de signaux (**e**) reçus est effectué en tenant compte de l'information supplémentaire concernant les signaux d'émission (**s**).

**2.** Procédé selon la revendication 1, dans lequel

- côté émetteur, en cas d'information manquante ou non reçue concernant la possibilité de traitement côté émetteur spécial, les données (**d**) à transmettre sont générées sous forme de signaux d'émission (**s**), qui peuvent être traités par des dispositifs de réception (MS) classiques sans possibilité de traitement spécialement élargie des signaux (**e**) reçus d'une façon classique pour ces dispositifs de réception (MS).

**3.** Procédé selon la revendication 1 ou 2, dans lequel des données sont transmises comme information supplémentaire, lesquelles sont indépendantes des données (**d**) à transmettre, en particulier des midambules, des informations d'attribution de code et/ou des parties de données supplémentaires, en particulier d'autres systèmes de transmission.

**4.** Procédé selon une revendication précédente, dans lequel l'information supplémentaire ordonne, en cas de transmission des signaux d'émission (**s**) à une pluralité de dispositifs de réception (JD-MS, JT-MS) détectant ou traitant ensemble, à certains de ces dispositifs de réception (JD-MS, JT-MS) de ne pas traiter ou traiter spécialement les signaux (**e**) reçus.

**5.** Procédé selon une revendication précédente, dans lequel l'information supplémentaire ordonne, en cas de transmission des signaux d'émission (**s**), à certains dispositifs de réception (JD-MS) de traiter seulement certaines parties, en particulier avec des codes attribués directement au dispositif de réception (JD-MS), des signaux (**e**) reçus.

**6.** Procédé selon l'une quelconque des revendications 1 à 5, dans lequel

- dans le cas d'un dispositif de réception (JD-MS) avec un traitement de signaux de réception ($\underline{e}$) et la prise en compte d'informations ($\underline{H}$) concernant les influences sur l'interface radio (V), en particulier par des canaux radio (CH) actifs,
- côté émetteur, lors de la génération de signaux d'émission ($\underline{s}$), l'utilisation des informations ($\underline{H}$) correspondantes sur les influences prises en compte côté récepteur sur l'interface radio (V) est exclue.

7. Procédé selon l'une quelconque des revendications 1 à 5, dans lequel

- dans le cas d'un dispositif de réception (JD-MS) avec un traitement de signaux de réception ($\underline{e}$) et la prise en compte d'informations ($\underline{H}$) concernant les influences sur l'interface radio (V), en particulier par l'intermédiaire de canaux radio (CH) actifs
- côté émetteur, lors de la génération de signaux d'émission ($\underline{s}$), l'effet de l'utilisation côté récepteur des informations ($\underline{H}$) correspondantes sur les influences est déterminé ou évalué et
- côté émetteur, une optimisation supplémentaire du signal d'émission ($\underline{s}$) est effectuée avec la prise en compte supplémentaire des informations ($\underline{H}$) sur ces influences pour ce dispositif de réception (JD-MS).

8. Procédé selon une revendication précédente, dans lequel

- côté émetteur, dans le cas de différents dispositifs de réception (JD-MS, JT-MS), on détermine sur l'au moins un dispositif d'émission (JT-BS) pour les dispositifs de réception (JD-MS, JT-MS) individuels à chaque fois des composants de signal d'émission ($\underline{s}_k$) appropriés pour ces dispositifs et un signal d'émission ($\underline{s}$) commun est généré pour tous ces dispositifs de réception (JD-MS, JT-MS).

9. Procédé selon une revendication précédente, dans lequel les signaux d'émission sont générés selon le procédé Joint Transmission et/ou côté récepteur, des signaux d'émission reçus sont traités au moyen de procédés de Joint Détection, en particulier

- il existe des canaux radio entre toutes les antennes d'émission et toutes les antennes de réception, qui sont utilisés au besoin en option comme trajet de transmission supprimant le signal, en particulier supprimant le signal de façon idéale ou suboptimale.

10. Procédé selon une revendication précédente, dans lequel la génération côté émetteur des signaux d'émission ($\underline{s}$) s'effectue par l'application d'une matrice de modulateur ($\underline{M}$) aux données ($\underline{d}$) à transmettre,

- la matrice de modulateur ($\underline{M}$) prenant en compte des influences sur l'interface radio (V), en particulier des canaux (CH) à utiliser de façon efficace, et/ou des possibilités de traitement côté émetteur spéciales de signaux ($\underline{e}$) reçus et
- une ou plusieurs sous-matrices de modulateur spéciales prenant ceci en compte étant mises à disposition de préférence pour des dispositifs de réception (JT-MS, JD-MS) sans traitement spécial.

11. Procédé selon une revendication précédente, dans lequel, lors de la génération de signal, des traitements côté récepteur de signaux d'émission reçus et des influences sur ces signaux d'émission sont décrits sous forme d'opérations linéaires par une matrice de démodulateur ($\underline{D}$) et sont intégrés de façon appropriée lors du processus de génération de signal côté émetteur.

12. Procédé selon une revendication précédente, dans lequel pour l'optimisation de la génération de signal lors du choix des différents canaux radio possibles et/ou différents procédés de traitement spéciaux, on prend en compte des critères de qualité (z, $\underline{G}$) pour les données, en particulier des critères de qualité concernant la minimisation de la puissance d'émission nécessaire par rapport à la qualité obtenue côté émetteur des données reconstituées.

13. Procédé selon une revendication précédente, dans lequel pour la génération du signal, on utilise dans le cas d'une représentation vectorielle des signaux d'émission ($\underline{s}$) au moins un critère de qualité comme forme quadratique.

14. Dispositif d'émission pour mettre en oeuvre un procédé susmentionné comprenant

- au moins une station d'émission (BS),
- au moins une antenne d'émission et
- au moins un dispositif de traitement (C) pour la conversion de données ($\underline{d}$) à transmettre en signaux d'émission (**s**) en tenant compte d'informations concernant des possibilités de traitement côté récepteur spéciales de signaux (**e**) reçus et pour la transmission des signaux d'émission (**s**) par l'intermédiaire de l'interface radio (V) de telle sorte que, côté émetteur, une information supplémentaire concernant les signaux d'émission (**s**) ou leur traitement est intégré(e) dans les signaux d'émission (**s**) ou est généré(e) et transmis(e) séparément de ces signaux.

15. Dispositif de réception (JT-MS) pour la mise en oeuvre d'un procédé selon les revendications 1 à 14, comprenant

- au moins une station de réception (MS),
- au moins une antenne de réception,
- au moins un dispositif de traitement pour la conversion de signaux (**e**) reçus par l'intermédiaire d'une interface radio (V) en données (**d'**) initiales de telle sorte que, du côté émetteur, le traitement de signaux (**e**) reçus est effectué en tenant compte de l'information supplémentaire concernant les signaux d'émission (**s**), et
- au moins un dispositif d'émission pour l'envoi d'une information qui caractérise les possibilités de traitement pour des signaux reçus du dispositif de réception, à un dispositif d'émission Joint Transmission (JT-BS).

## Fig. 1

| MS-Anzahl K = 2; Spreizfaktor Q = 8, Kanalimpulsantwortlänge W = 4; Anzahl der Datensymbole pro MS  N = 1 | | | | | | | |
|---|---|---|---|---|---|---|---|
| q | 1 | 2 | 3 | 4 | 5 | 6 | 7 | 8 |
| $\underline{c}^{(1)T}$ | -1 | 1 | 1 | -1 | 1 | 1 | -1 | 1 |
| $\underline{c}^{(2)T}$ | -1 | -1 | 1 | 1 | 1 | -1 | -1 | -1 |

| w | 1 | 2 | 3 | 4 |
|---|---|---|---|---|
| $\underline{h}^{(1)T}$ | 0,3559 - j 0,3512 | 0,2681 - j 0,4220 | 0,3229 - j 0,3817 | 0,2885 - j 0,4083 |
| $\underline{h}^{(2)T}$ | 0,4289 - j 0,2569 | -0,4996 - j 0,0204 | 0,4841 + j 0,1251 | -0,3767 - j 0,3287 |

## Fig. 2

**EP 1 276 246 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Synthesis of joint detection and joint transmission in CDMA downlinks. **M. MEURER ; H. TRÖGER ; T. WEBER ; P.W. BAIER.** ELECTRONICS LETTERS. 05. Juli 2001, vol. 37, 919-920